# FASCICULE DE BREVET EUROPEEN

(11) **EP 0 999 368 B1**
(45) Date de publication et mention de la délivrance du brevet: **02.05.2003**
(21) Numéro de dépôt: 99402744.9
(22) Date de dépôt: 04.11.1999
(51) Int. Cl.: F16B 2/10, F16M 13/02

(54) **Pince de fixation, notamment pour baladeuse**
Befestigungsklammer, insbesondere für Handleuchte
Fastening clamp, especially for hand lamp

(30) Priorité: 06.11.1998 FR 9813985
(43) Date de publication de la demande: 10.05.2000
(73) Titulaire: LEGRAND, F-87000 Limoges (FR); LEGRAND SNC, F-87000 Limoges (FR)
(72) Inventeur: Maziere, Laurent, 87000 Limoges (FR)
(74) Mandataire: Santarelli

(56) Documents cités:
- EP-A- 0 445 014
- US-A- 5 464 182
- US-A- 5 581 900
- US-A- 5 819 425

## Description

La présente invention concerne d'une manière générale les pinces de fixation du type de celles mises en oeuvre pour permettre d'assujettir un quelconque article à un quelconque support, qu'une telle pince de fixation équipe à demeure un tel article, en faisant partie intégrante de celui-ci, ou que, à la manière d'un accessoire, elle ne soit rapportée qu'à la demande sur cet article selon les nécessités du moment.

Elle vise plus particulièrement, mais non nécessairement exclusivement, le cas où l'article concerné est une baladeuse, c'est-à-dire une lampe électrique mobile que l'usager peut déplacer à son gré pour éclairer au mieux le site sur lequel il doit intervenir.

Il importe que, pour se libérer les mains, l'usager puisse poser cette baladeuse sur un quelconque support, souvent improvisé, en l'assujettissant de préférence à celui-ci.

Les pinces de fixation communément prévues dans ce but comportent, usuellement, deux mors, qui sont l'un et l'autre montés pivotants, et qui sont ainsi mobiles l'un par rapport à l'autre entre une position d'ouverture et une position de fermeture, des moyens élastiques de rappel, qui sollicitent en permanence les deux mors en direction de leur position de fermeture, et une poignée de manoeuvre, en général un simple levier, qui est à la disposition de l'usager, et qui, pour la commande de l'ensemble, est solidaire de l'un des mors, dit ci-après, par simple commodité, mors inférieur, l'autre mors étant lui-même dit ci-après, par simple commodité, mors supérieur.

En pratique, à ce jour, et par mesure de simplicité, les deux mors sont directement articulés l'un à l'autre, suivant un axe de rotation qui leur est ainsi commun.

Cette disposition a donné et peut encore donner satisfaction.

Mais elle a pour inconvénient qu'il est difficile, avec elle, de répondre de manière convenable aux exigences qui sont normalement à satisfaire.

L'une de ces exigences tient à ce que, pour la position de fermeture des mors, les moyens élastiques de rappel auxquels sont soumis ces mors doivent être sous une précontrainte non négligeable.

Il importe, en effet, que l'effort de serrage exercé par ces mors lorsqu'ils sont en prise avec un support reste suffisant même lorsque ce support ne présente qu'une épaisseur relativement réduite, comme cela peut être par exemple le cas pour une simple plaque en tôle ou en verre ou pour un barreau d'échelle.

Une autre des exigences à satisfaire tient à ce que la capacité angulaire d'ouverture de ces mors doit corollairement être suffisante, en étant en pratique d'au moins 50°, pour que, au contraire, ils soient à même d'être engagés sur un support d'épaisseur relativement notable, comme cela est le cas par exemple d'un madrier.

Or, les deux mors étant articulés l'un à l'autre, et le levier de manoeuvre étant lié au mors inférieur, cette capacité angulaire d'ouverture se répercute intégralement sur la course d'ouverture du levier de manoeuvre, ce qui, pour certains usagers, au moins, rend parfois difficile le maniement de celui-ci.

En outre, l'effort à exercer sur le levier de manoeuvre allant inévitablement en croissant à l'ouverture, cet effort atteint, fréquemment, en fin de course, au détriment du confort de l'usager, une valeur relativement importante si, dès l'origine, il a une valeur non négligeable pour satisfaire à l'exigence de précontrainte précédente, ce qui, de ce point de vue, rend contradictoires les deux exigences auxquelles il convient cependant de répondre.

La présente invention a d'une manière générale pour objet une disposition permettant de surmonter ces difficultés et conduisant en outre à d'autres avantages.

De manière plus précise, elle a pour objet une pince de fixation, notamment pour baladeuse, du genre suivant la revendication 1.

Ces dispositions, qui impliquent simplement la mise en oeuvre d'une pièce supplémentaire, la course d'ouverture du levier de manoeuvre est, pour une même capacité angulaire d'ouverture des mors, réduite de moitié, ce qui facilite avantageusement son maniement.

En effet, la capacité angulaire d'ouverture des mors résulte de la somme de la capacité angulaire d'ouverture de chacun de ceux-ci par rapport à l'entretoise médiane qui les relie, et, pour une même capacité angulaire d'ouverture pour le mors inférieur, dont dépend directement la course d'ouverture du levier de manoeuvre, elle est ainsi doublée.

Certes, on connaît déjà des pinces telles que celle décrite dans le brevet US-A-5 581 900 dont chacun des deux mors pivote selon un axe qui lui est propre et dont chacun de l'un desdits mors est solidaire d'un levier de commande actionné par l'usager, indépendamment de l'autre desdits mors de la pince.

De telles pinces peuvent donner satisfaction dans certains cas d'utilisation, mais elles ne permettent aucun effet d'amplification de la course angulaire des leviers de commande.

Suivant un développement de l'invention, les moyens élastiques de rappel auxquels sont soumis les mors peuvent avantageusement intervenir, non pas directement entre ces mors, mais entre l'un de ceux-ci et l'entretoise médiane qui les relie.

Il en résulte que, pour une même capacité angulaire d'ouverture des mors, et, donc, pour une même course d'ouverture du levier de manoeuvre, la sollicitation dont sont l'objet ces moyens élastiques de rappel est elle-même réduite de moitié, ce qui, les conditions étant égales par ailleurs, permet, d'une part, d'appliquer à ces moyens élastiques de rappel une précontrainte plus importante pour la position de fermeture des mors, au bénéfice de la capacité de serrage de ceux-ci sur un support d'épaisseur relativement réduite, et ce qui, d'autre part, permet, au bénéfice d'un meilleur confort pour l'usager, de rendre plus constant l'effort à surmonter à l'ouverture, cet effort se situant alors avantageusement dans une plage de travail de ces moyens élastiques de rappel moins étendue.

Par ailleurs, eu égard à la course d'ouverture plus réduite de son levier de manoeuvre, la pince de fixation suivant l'invention a avantageusement des qualités ergonomiques accrues.

Suivant une forme de réalisation, les moyens élastiques de rappel interviennent entre le mors supérieur et l'entretoise médiane, et, du côté opposé à leur extrémité libre par rapport à leur axe de rotation, les deux mors comportent chacun un talon par lequel ils sont en appui l'un sur l'autre.

Ainsi, l'ouverture du mors supérieur résulte très simplement de celle du mors inférieur, le mors inférieur agissant directement en poussée sur le mors supérieur sous les effets de la sollicitation appliquée au levier de manoeuvre dont il est solidaire.

Eu égard, corollairement, à l'action des moyens élastiques de rappel, les deux mors sont avantageusement toujours en contact l'un avec l'autre par leurs talons respectifs, sans qu'intervienne entre eux un quelconque jeu.

Enfin, suivant une autre forme de réalisation, l'entretoise médiane mise en oeuvre suivant l'invention est en deux parties.

Sa réalisation s'en trouve simplifiée, et il en est de même pour le montage de l'ensemble.

En particulier, la partie des moyens élastiques de rappel par laquelle ceux-ci sont en prise avec l'entretoise médiane peut ainsi avantageusement intervenir directement entre les deux parties constitutives de cette entretoise médiane, sans que, pour son maintien, il soit nécessaire de rapporter une quelconque pièce auxiliaire sur celle-ci.

En outre, la partie centrale de l'entretoise médiane étant ainsi dégagée, le talon par lequel les mors sont en appui l'un sur l'autre peut avantageusement s'étendre suivant sensiblement le plan médian de ces mors, au bénéfice du centrage des efforts transmis, et, donc, au bénéfice des conditions de travail de l'ensemble.

Les caractéristiques et avantages de l'invention ressortiront d'ailleurs de la description qui va suivre, à titre d'exemple, en référence aux dessins schématiques annexés sur lesquels :
la figure 1 est une vue en perspective d'une pince de fixation suivant l'invention et de l'article qu'elle équipe, pour la position de fermeture de cette pince de fixation ;
la figure 2 est, déduite de la figure 1, une vue en perspective de cette seule pince de fixation, représentée isolément ;
la figure 3 en est, à échelle supérieure, et suivant la ligne III-III de la figure 2, une vue en coupe transversale, pour cette position de fermeture ;
la figure 4 en est une vue en coupe transversale analogue à celle de la figure 3, pour sa position d'ouverture ;
la figure 5 est, suivant la ligne V-V de la figure 2, une autre vue partielle en coupe transversale de la pince de fixation suivant l'invention, pour sa position de fermeture ;
la figure 6 en est une vue partielle en coupe transversale analogue à celle de la figure 5, pour sa position d'ouverture ;
la figure 7 est une vue partielle en perspective éclatée de la pince de fixation suivant l'invention, sur laquelle cette pince de fixation est vue légèrement de dessous, et sur laquelle le ressort de flexion constituant les moyens élastiques de rappel associés à ses mors a été volontairement extrait de l'entretoise médiane qu'elle comporte suivant l'invention ;
la figure 8 est une vue en perspective éclatée des deux parties constitutives de cette entretoise médiane.

Ces figures illustrent, à titre d'exemple, l'application de l'invention au cas où l'article concemé est une baladeuse 10.

Cette baladeuse 10 ne relevant pas, par elle-même, de la présente invention, elle ne sera pas décrite ici.

Il suffira d'indiquer que, pour permettre son assujettissement à un quelconque support, non représenté, elle est équipée, à demeure ou de manière amovible, d'une pince de fixation 11.

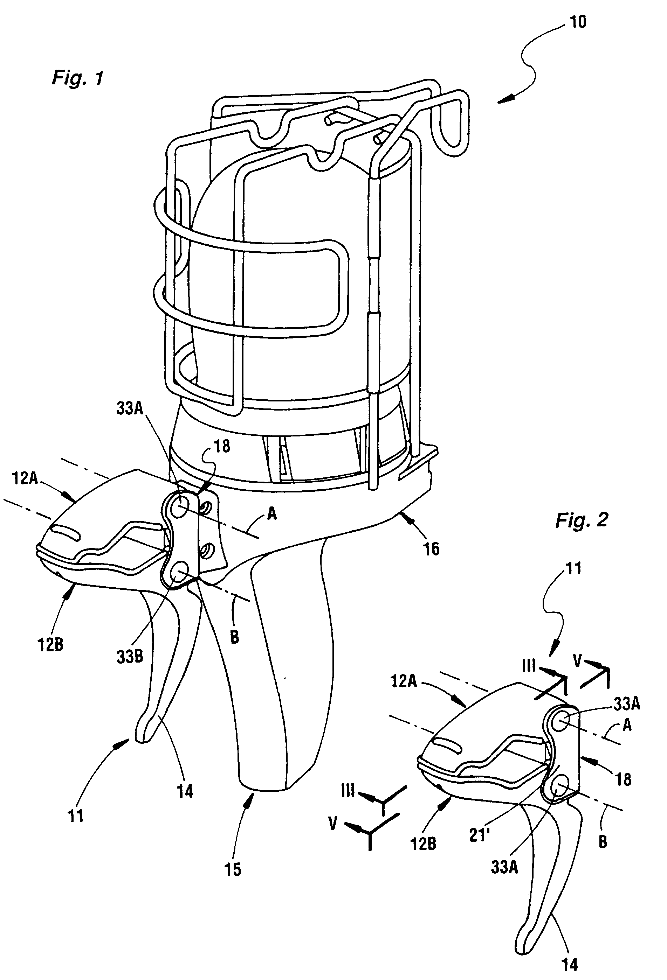

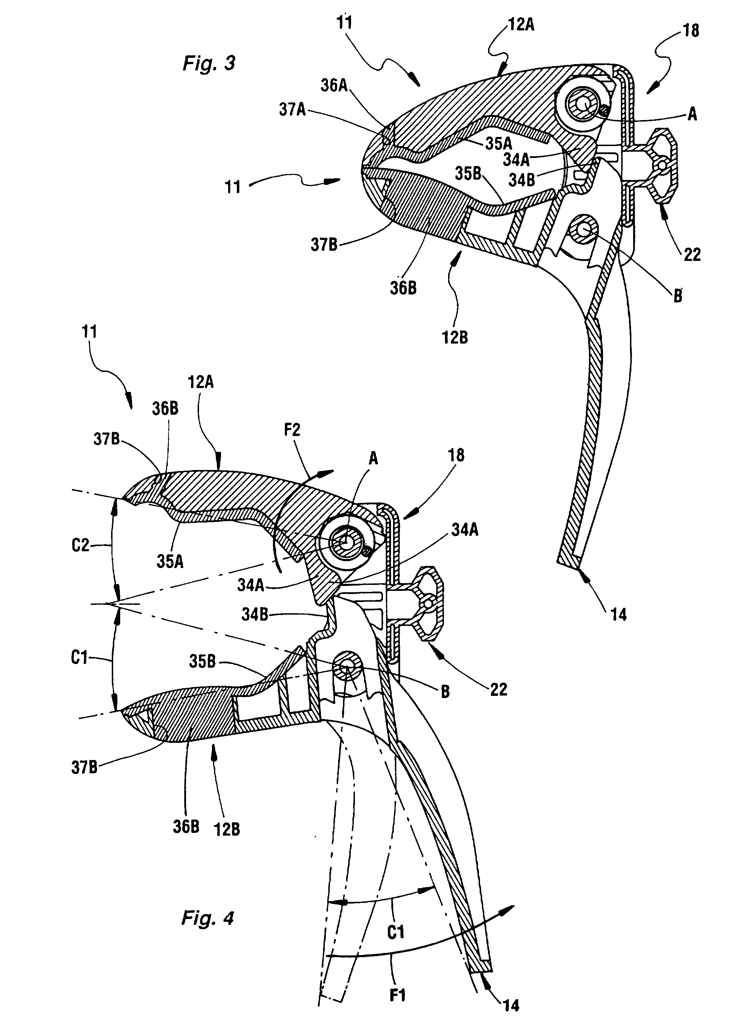

De manière connue en soi, cette pince de fixation 11 comporte, globalement, et suivant des dispositions décrites plus en détail ultérieurement, deux mors 12A, 12B, l'un supérieur, l'autre inférieur, qui sont l'un et l'autre montés pivotants, et qui sont ainsi mobiles l'un par rapport à l'autre entre une position d'ouverture, figure 4, et une position de fermeture, figures 1 à 3, des moyens élastiques de rappel 13, qui sollicitent en permanence les deux mors 12A, 12B en direction de leur position de fermeture, et un levier de manoeuvre 14, qui est à la disposition de l'usager, en regard d'une poignée de préhension 15 appartenant au boîtier 16 de la baladeuse 10, et qui, pour la commande de l'ensemble, c'est-à-dire pour la commande de la pince de fixation 11, est solidaire de l'un des deux mors 12A, 12B, en l'espèce le mors 12B inférieur.

Suivant l'invention, les deux mors 12A, 12B sont reliés l'un à l'autre par une entretoise médiane 18, à laquelle ils sont chacun respectivement articulés suivant des axes de rotation A, B distincts, et par l'intermédiaire de laquelle l'ensemble de la pince de fixation 11 est rendu solidaire du boîtier 16 de la baladeuse 10.

Dans la forme de réalisation représentée, cette entretoise médiane 18 est une chape qui coiffe localement l'un et l'autre des deux mors 12A, 12B, à l'arrière de ceux-ci, c'est-à-dire du côté opposé à leur extrémité libre.

Cette entretoise médiane 18 comporte, donc, en U, une partie centrale 20, et, sensiblement perpendiculairement à celle-ci, deux ailes latérales 21', 21" qui sont parallèles l'une à l'autre.

Dans la forme de réalisation représentée, la partie centrale 20 présente, en saillie, à son dos, un plot 22, en forme de champignon, propre à permettre de rapporter l'ensemble, de manière amovible, sur un bossage du boîtier 16 de la baladeuse 10, suivant des dispositions qui, ne relevant pas de la présente invention, ne seront pas décrites ici.

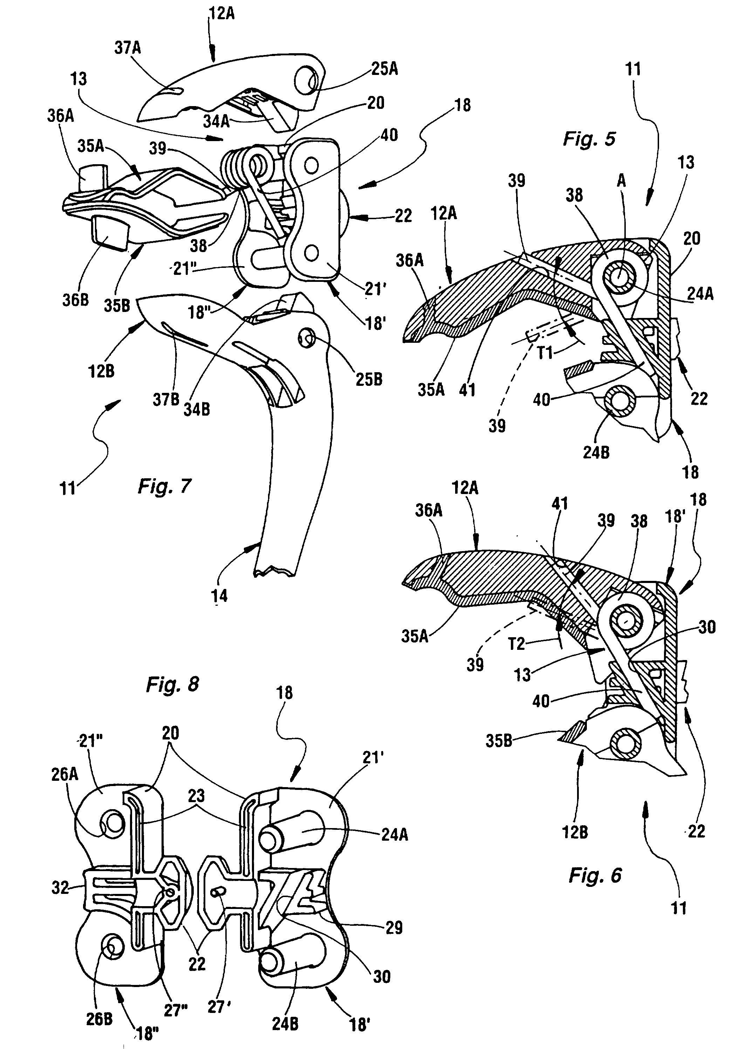

Préférentiellement, et cela est le cas dans la forme de réalisation représentée, l'entretoise médiane 18 est en deux parties 18', 18", auxquelles appartiennent chacune respectivement ses deux ailes latérales 21', 21", et entre lesquelles se répartissent également, pour moitié, la partie centrale 20 et le plot 22, figure 8.

Dans la forme de réalisation représentée, ces deux parties 18', 18" de l'entretoise médiane 18 s'affrontent l'une à l'autre suivant un plan de jonction qui, parallèle aux ailes latérales 21', 21", s'étend sensiblement à mi-distance entre celles-ci.

Par exemple, et tel que représenté, la partie centrale 20 de l'entretoise médiane 18 est renforcée par une armature interne 23.

Dans la forme de réalisation représentée, l'aile latérale 21' de cette entretoise médiane 18 présente, d'un seul tenant, en saillie sur sa surface intérieure, pour la matérialisation des axes de rotation A, B des mors 12A, 12B, deux bouts d'arbre 24A, 24B, qui s'étendent parallèlement l'un à l'autre, à distance l'un de l'autre, et sur lesquels les mors 12A, 12B sont chacun respectivement montés pivotants par des ouvertures 25A, 25B, avec, en correspondance, sur l'aile latérale 21" associée, des ouvertures 26A, 26B dans lesquelles les bouts d'arbre 24A, 24B sont eux-mêmes chacun respectivement engagés par leur extrémité.

Ces bouts d'arbre 24A, 24B sont ainsi dûment calés à l'une et l'autre de leurs extrémités, au bénéfice de leur tenue.

Par leur engagement dans les ouvertures 26A, 26B associées, ils contribuent, en outre, au montage, au positionnement de l'ensemble.

Pour contribuer, également, à ce positionnement, il peut être prévu, tel que représenté, en saillie sur l'une des parties 18', 18", au moins un téton 27', et, en creux sur l'autre de ces parties 18', 18", en correspondance avec le téton 27' précédent, au moins un logement 27" propre à l'engagement d'un tel téton 27'.

En variante, le téton 27' peut, par exemple, être remplacé par une nervure et le logement 27" par une rainure complémentaire de cette nervure, cette nervure et cette rainure intervenant par exemple au niveau de l'armature interne 23, en lieu et place de celle-ci, cette armature interne 23 étant alors supprimée.

Dans la forme de réalisation représentée, et pour des raisons qui apparaîtront ultérieurement, l'une des parties 18', 18" de l'entretoise médiane 18, en l'espèce sa partie 18', comporte, en outre, en creux sur sa surface intérieure, et, plus précisément, en creux sur un bossage 29 faisant saillie sur la surface intérieure de l'aile latérale 21' correspondante, entre les bouts d'arbre 24A, 24B, et à niveau avec son plan de jonction avec l'autre partie 18", une rainure 30, qui s'étend en oblique.

Corollairement, l'autre partie 18', 18", et, donc, en l'espèce, la partie 18", présente, en saillie sur l'aile latérale 21" correspondante, entre les ouvertures 26A, 26B, un bossage 32 propre à la fermeture de la rainure 30 précédente.

Dans la forme de réalisation représentée, les bouts d'arbre 24A, 24B sont creux, pour le passage de moyens de fixation 33A, 33B, par exemple des vis, propres à assujettir de manière positive l'une à l'autre les deux parties 18', 18" constitutives de l'entretoise médiane 18.

Dans la forme de réalisation représentée, les deux mors 12A, 12B comportent, chacun, du côté opposé à leur extrémité libre par rapport à leur axe de rotation A, B, un talon 34A, 34B, par lequel ils sont en appui l'un sur l'autre.

Par exemple, et tel que représenté, le talon 34A, 34B de chacun des deux mors 12A, 12B s'étend sensiblement au droit de leur axe de rotation A, B, et il s'étend sensiblement en équerre par rapport à leur partie courante.

Le talon 34A, 34B de chacun des deux mors 12A, 12B s'étend suivant sensiblement leur plan médian, c'est-à-dire suivant le plan qui, perpendiculaire à leur axe de rotation A, B, s'étend suivant sensiblement leur zone centrale.

Tel que représenté, chacun des deux mors 12A, 12B est tapissé, intérieurement, par un revêtement antidérapant 35A, 35B.

Pour son maintien, ce revêtement antidérapant 35A, 35B présente, en saillie, à son dos, dans la forme de réalisation représentée, une lamelle 36A, 36B par laquelle il est engagé à force dans un logement 37A, 37B prévu de manière complémentaire à cet effet dans le mors 12A, 12B concerné.

Pour le mors 12A supérieur, la lamelle 36A s'étend sensiblement parallèlement aux axes de rotation A, B.

Pour le mors 12B inférieur, la lamelle 36B s'étend au contraire sensiblement perpendiculairement à ces axes de rotation A, B.

Dans une variante de réalisation non représentée, le revêtement antidérapant 35A, 35B des mors 12A, 12B présente, à sa périphérie, un rebord par lequel il vient se crocheter extérieurement sur un tel mors 12A, 12B, les mors 12A, 12B présentant, corollairement, de place en place, des pattes d'accrochage, qui font saillie latéralement, et qui sont ainsi propres au crochetage de ce revêtement antidérapant 35A, 35B.

Dans la forme de réalisation représentée, les moyens élastiques de rappel 13 interviennent entre l'un des mors 12A, 12B et l'entretoise médiane 18.

Tel que représenté, ces moyens élastiques de rappel 13 interviennent entre le mors 12A supérieur et l'entretoise médiane 18.

Dans la forme de réalisation représentée, ces moyens élastiques de rappel 13 sont formés par un ressort de flexion comportant une partie médiane 38, en hélice, qui est logée dans le mors 12A, 12B concerné, et, donc, en l'espèce, dans le mors 12A supérieur, et deux branches latérales 39, 40, dont l'une, en l'espèce la branche 39, est en prise avec ce mors 12A supérieur, à la faveur d'un perçage 41 de celui-ci, et dont l'autre, et, donc, en l'espèce, la branche 40, est en prise avec l'entretoise médiane 18.

En pratique, la branche 40 correspondante du ressort de flexion constituant les moyens élastiques de rappel 13 est simplement en prise avec la rainure 30 que cette entretoise médiane 18 présente intérieurement à la jonction entre ses deux parties 18', 18".

Au montage, le ressort de flexion constituant les moyens élastiques de rappel 13 est mis en place dans le mors 12A supérieur, avec sa branche 39 dans le perçage 41 de celui-ci.

Le mors 12A supérieur ainsi équipé de ces moyens élastiques de rappel 13 est alors engagé sur le bout d'arbre 24A de la partie 18' de l'entretoise médiane 18, sans aucune précontrainte de ces moyens élastiques de rappel 13.

Il est ensuite placé dans une position correspondant à une position d'ouverture intermédiaire, pour armer le ressort de flexion constituant les moyens élastiques de rappel 13 et permettre ainsi l'insertion du mors 12B inférieur.

Le mors 12B inférieur est alors lui-même mis en place, en l'engageant sur le bout d'arbre 24B de la partie 18' de l'entretoise médiane 18, et en le disposant dans une position pour laquelle son talon 34B s'étend à l'arrière du talon 34A du mors 12A supérieur.

Les deux mors 12A, 12B étant ainsi en place, il suffit, ensuite, de fermer l'entretoise médiane 18, en rapportant sur sa partie 18' équipée de ces mors 12A, 12B sa partie 18".

Si, par construction, et tel que schématisé en traits interrompus sur la figure 5, les deux branches 39, 40 du ressort de flexion constituant les moyens élastiques de rappel 13 font, entre elles, au repos, un angle sensiblement égal à 90°, la précontrainte à laquelle sont soumis ces moyens élastiques de rappel 13 pour la position de fermeture de la pince de fixation 11 suivant l'invention correspond, par exemple, à un angle de torsion T1 supplémentaire d'environ 45°.

Pour cette position de fermeture, les deux mors 12A, 12B sont en appui l'un contre l'autre par leurs extrémités libres respectives.

Lorsque, en service, et tel que schématisé par une flèche F1 à la figure 4, le levier de manoeuvre 14 est soumis à une action d'ouverture, il pivote d'un angle C1 autour de l'axe de rotation B du mors 12B inférieur dont il est solidaire, et ce mors 12B inférieur pivote lui-même, d'un même angle C1, et dans le même sens, autour de cet axe de rotation B.

Repoussant, par son talon 34B, le mors 12A supérieur, en agissant pour ce faire sur le talon 34A de ce mors 12A supérieur, le mors 12B inférieur provoque, au fur et à mesure de son propre pivotement, le pivotement du mors 12A supérieur autour de l'axe de rotation A de celui-ci, suivant un angle C2, qui est sensiblement égal à l'angle C1 précédent, mais, tel que schématisé par une flèche F2 à la figure 4, dans le sens opposé au précédent.

Ainsi, la course d'ouverture du levier de manoeuvre 14 est sensiblement moindre de moitié que la course angulaire d'ouverture totale de la pince de fixation 11 prise dans son ensemble, entre les extrémités libres de ses mors 12A, 12B, celle-ci résultant sensiblement de la somme des angles C1, C2.

Par ailleurs, pour la position d'ouverture de la pince de fixation 11 suivant l'invention, et tel que représenté sur la figure 6, les branches 39, 40 du ressort de flexion constituant les moyens élastiques de rappel 13 sont sensiblement alignées l'une avec l'autre.

Autrement dit, de la position de fermeture à la position d'ouverture, l'effort appliqué à ces moyens élastiques de rappel 13 correspond sensiblement à un angle de torsion T2 supplémentaire, qui est sensiblement du même ordre que l'angle de torsion T1 précédent.

Correspondant, ainsi, sensiblement à la moitié de la plage de travail totale des moyens élastiques de rappel 13, la contrainte initiale de ces moyens élastiques de rappel 13 peut avantageusement être relativement importante.

Dans ce qui précède, il a été supposé que, comme décrit, la pince de fixation 11 suivant l'invention est équipée de moyens d'accouplement, en l'espèce le plot 22, propres à permettre de la rapporter de manière amovible sur un quelconque article à fixer, en l'espèce la baladeuse 10.

Mais, en variante, elle peut faire corps à demeure avec un tel article.

## Revendications

1. Pince de fixation du genre comportant deux mors (12A, 12B), qui sont l'un et l'autre montés pivotants, et qui sont ainsi mobiles l'un par rapport à l'autre entre une position d'ouverture et une position de fermeture, des moyens élastiques de rappel (13), qui sollicitent en permanence les deux mors (12A, 12B) en direction de leur position de fermeture, et un levier de manoeuvre (14), qui est à la disposition de l'usager, et qui, pour la commande de l'ensemble, est solidaire de l'un des mors (12B), dit mors inférieur, l'autre mors (12A) étant lui-même dit mors supérieur, dans laquelle les deux mors (12A, 12B) étant articulés selon des axes de rotation (A, B) distincts sur une entretoise (18), ils comportent des moyens d'appui mutuel (34A, 34B) de sorte que le pivotement de l'un des mors (12A, 12B) dans un sens entraîne le pivotement de l'autre des mors (12A, 12B) en sens inverse.

2. Pince de fixation suivant la revendication 1, **caractérisée en ce que** lesdits moyens d'appui mutuel (34A,34B) sont disposés sur les mors (12A, 12B) du côté opposé à l'extrémité libre de ceux-ci, par rapport à leur axe de rotation (A, B), et forment chacun un talon (34A, 34B) par lequel les deux mors (12A, 12B) sont en appui l'un sur l'autre.

3. Pince de fixation suivant la revendication 2, **caractérisée en ce que** le talon (34A, 34B) de chacun des deux mors (12A, 12B) s'étend sensiblement au droit de leur axe de rotation (A, B).

4. Pince de fixation suivant l'une quelconque des revendications 2, ou 3, **caractérisée en ce que** le talon (34A, 34B) de chacun des deux mors (12A, 12B) s'étend suivant sensiblement leur plan médian.

5. Pince de fixation suivant l'une quelconque des revendications 2 à 4, **caractérisé en ce que** le talon (34A, 34B) de chacun des deux mors (12A, 12B) s'étend sensiblement en équerre par rapport à leur partie courante.

6. Pince de fixation suivant l'une quelconque des revendications 1 à 5, **caractérisée en ce que** les moyens élastiques de rappel (13) interviennent entre l'un des mors (12A, 12B) et l'entretoise médiane (18).

7. Pince de fixation suivant la revendication 6, **caractérisée en ce que** les moyens élastiques de rappel (13) interviennent entre le mors (12A) supérieur et l'entretoise médiane (18).

8. Pince de fixation suivant l'une quelconque des revendications 6, 7, **caractérisée en ce que** les moyens élastiques de rappel (13) sont formés par un ressort de flexion comportant une partie médiane (38), en hélice, qui est logée dans le mors (12A) concerné, et deux branches latérales (39, 40), dont l'une est en prise avec ce mors (12A), et dont l'autre est en prise avec l'entretoise médiane (18).

9. Pince de fixation suivant l'une quelconque des revendications 1 à 8, **caractérisée en ce que** l'entretoise médiane (18) est une chape qui coiffe localement l'un et l'autre des deux mors (12A, 12B).

10. Pince de fixation suivant la revendication 9, **caractérisée en ce que** l'entretoise médiane (18) est en deux parties (18', 18"), auxquelles appartiennent chacune respectivement ses deux ailes latérales (21', 21").

11. Pince de fixation suivant les revendications 8 et 10, prises conjointement, **caractérisée en ce que** l'une des parties (18', 18") de l'entretoise médiane (18) comporte, en creux sur sa surface intérieure, une rainure (30), et la branche (40) correspondante du ressort de flexion constituant les moyens élastiques de rappel (13) est simplement en prise avec cette rainure (30).

12. Pince de fixation suivant l'une quelconque des revendications 1 à 11, **caractérisée en ce qu'**elle est équipée de moyens d'accouplement (22) propres à permettre de la rapporter de manière amovible sur un quelconque article (10) à fixer.

13. Pince de fixation suivant l'une quelconque des revendications 1 à 11, **caractérisée en ce qu'**elle fait corps à demeure avec un quelconque article (10) à fixer.

## Patentansprüche

1. Befestigungsklammer, umfassend zwei Backen (12A, 12B), die beide schwenkbar montiert sind und die auf diese Weise zueinander zwischen einer Öffnungsstellung und einer Verschlußstellung beweglich sind, elastische Rückholmittel (13), die die beiden Backen (12A, 12B) ständig in Richtung ihrer Verschlußstellung beaufschlagen, und einen Betätigungshebel (14), der dem Benutzer zur Verfügung steht und der zur Betätigung der Einheit mit einer der Backen (12B), untere Backe genannt, fest verbunden ist, wobei die andere Backe (12A) ihrerseits obere Backe genannt wird, Befestigungsklammer, bei der die beiden Backen (12A, 12B) gemäß verschiedenen Drehachsen (A, B) an einem Steg (18) angelenkt sind und Mittel (34A, 34B) zur gegenseitigen Auflage besitzen, so daß das Verschwenken einer der Backen (12A, 12B) in einer Richtung das Verschwenken der anderen Backe (12A, 12B) in umgekehrter Richtung mit sich bringt.

2. Befestigungsklammer nach Anspruch 1, **dadurch gekennzeichnet, daß** die Mittel (34A, 34B) zur gegenseitigen Auflage auf den Backen (12A, 12B) bezüglich ihrer Drehachse (A, B) auf der ihrem freien Ende entgegengesetzten Seite angeordnet sind und jeweils eine Ferse (34A, 34B) bilden, mit der die beiden Backen (12A, 12B) aneinander anliegen.

3. Befestigungsklammer nach Anspruch 2, **dadurch gekennzeichnet, daß** die Ferse (34A, 34B) jeder der beiden Backen (12A, 12B) sich im wesentlichen auf Höhe ihrer Drehachse (A, B) erstreckt.

4. Befestigungsklammer nach einem der Ansprüche 2 oder 3, **dadurch gekennzeichnet, daß** die Ferse (34A, 34B) jeder der beiden Backen (12A, 12B) sich im wesentlichen gemäß ihrer Mittelebene erstreckt.

5. Befestigungsklammer nach einem der Ansprüche 2 bis 4, **dadurch gekennzeichnet, daß** die Ferse (34A, 34B) jeder der beiden Backen (12A, 12B) sich im wesentlichen rechtwinklig zu ihrem laufenden Teil erstreckt.

6. Befestigungsklammer nach einem der Ansprüche 1 bis 5, **dadurch gekennzeichnet, daß** die elastischen Rückholmittel (13) zwischen einer der Backen (12A, 12B) und dem Mittelsteg (18) vorgesehen sind.

7. Befestigungsklammer nach Anspruch 6, **dadurch gekennzeichnet, daß** die elastischen Rückholmittel (13) zwischen der oberen Backe (12A) und dem Mittelsteg (18) vorgesehen sind.

8. Befestigungsklammer nach einem der Ansprüche 6, 7, **dadurch gekennzeichnet, daß** die elastischen Rückholmittel (13) von einer Biegefeder gebildet sind, die einen schraubenförmigen Mittelteil (38), der in der betreffenden Backe (12A) sitzt, und zwei Seitenschenkel (39, 40) aufweist, von denen einer mit dieser Backe (12A) in Eingriff steht und der andere mit dem Mittelsteg (18) in Eingriff steht.

9. Befestigungsklammer nach einem der Ansprüche 1 bis 8, **dadurch gekennzeichnet, daß** der Mittelsteg (18) eine Gabel ist, die die beiden Backen (12A, 12B) örtlich umgreift.

10. Befestigungsklammer nach Anspruch 9, **dadurch gekennzeichnet, daß** der Mittelsteg (18) aus zwei Teilen (18', 18") besteht, zu denen jeder seiner beiden Seitenschenkel (21', 21") gehört.

11. Befestigungsklammer nach den Ansprüchen 8 und 10 zusammen, **dadurch gekennzeichnet, daß** einer der Teile (18', 18") des Mittelstegs (18) auf seiner Innenfläche vertieft eine Nut (30) aufweist und der entsprechende Schenkel (40) der die elastischen Rückholmittel (13) bildenden Biegefeder mit dieser Nut (30) einfach in Eingriff steht.

12. Befestigungsklammer nach einem der Ansprüche 1 bis 11, **dadurch gekennzeichnet, daß** sie mit Kupplungsmitteln (22) ausgerüstet ist, die ihre lösbare Anbringung an einem beliebigen zu befestigenden Artikel (10) gestatten.

13. Befestigungsklammer nach einem der Ansprüche 1 bis 11, **dadurch gekennzeichnet, daß** sie mit einem beliebigen zu befestigenden Artikel (10) bleibend einen Körper bildet.

## Claims

1. Fixing clamp of the type comprising two jaws (12A, 12B) which are each mounted in pivoting manner, and which are also movable vis-à-vis each other between an open position and a closed position, elastic return means (13) which continuously tension the two jaws (12A, 12B) in the direction of their closed position, and an operating lever (14) which is available to the user and which, for operating the apparatus, is integral with one of the jaws (12B), called lower jaw, the other jaw (12A) itself being called upper jaw, in which the two jaws (12A, 12B), being articulated about separate rotation axes (A, B) on a brace (18), [they] include means of mutual support (34A, 34B) such that the pivoting of one of the jaws (12A, 12B) in one direction causes the pivoting of the other jaw (12A, 12B) in the opposite direction.

2. Fixing clamp according to claim 1, **characterized in that** said means of mutual support (34A, 34B) are arranged on the jaws (12A, 12B) on the side opposite the free end of same, relative to their rotation axis (A, B), and each form a heel (34A, 34B) by means of which the two jaws (12A, 12B) rest one on the other.

3. Fixing clamp according to claim 2, **characterized in that** the heel (34A, 34B) of each of the two jaws (12A, 12B) extends essentially at right angles to their rotation axis (A, B).

4. Fixing clamp according to any one of claims 2 or 3, **characterized in that** the heel (34A, 34B) of each of the two jaws (12A, 12B) extends essentially along their median plane.

5. Fixing clamp according to any one of claims 2 to 4, **characterized in that** the heel (34A, 34B) of each of the two jaws (12A, 12B) extends essentially on the square relative to their standard part.

6. Fixing clamp according to any one of claims 1 to 5, **characterized in that** the elastic return means (13) are situated between one of the jaws (12A, 12B) and the median brace (18).

7. Fixing clamp according to claim 6, **characterized in that** the elastic return means (13) are situated between the upper jaw (12A) and the median brace (18).

8. Fixing clamp according to any one of claims 6, 7, **characterized in that** the elastic return means (13) are formed by a bending spring having a median part (38) in helical form, which is housed in the jaw (12A) concerned, and two lateral branches (39, 40), one of which engages with this jaw (12A), and the other of which engages with the median brace (18).

9. Fixing clamp according to any one of claims 1 to 8, **characterized in that** the median brace (18) is a cap which locally covers both jaws (12A, 12B).

10. Fixing clamp according to claim 9, **characterized in that** the median brace (18) is in two parts (18', 18"), to each of which two lateral wings respectively (21', 21") belong.

11. Fixing clamp according to claims 8 and 10, taken together, **characterized in that** one of the parts (18', 18") of the median brace (18) has, recessed on its internal surface, a groove (30), and the corresponding branch (40) of the bending spring constituting the elastic return means (13) simply engages with this groove (30).

12. Fixing clamp according to any one of claims 1 to 11, **characterized in that** they are equipped with coupling means (22) suitable for allowing them to be fixed in detachable manner to any article (10) to be fixed.

13. Fixing clamp according to any one of claims 1 to 11, **characterized in that** it permanently corporates with any article to be fixed (10).
